# EUROPÄISCHE PATENTSCHRIFT

(11) **EP 4 147 753 B1**
(45) Veröffentlichungstag und Bekanntmachung des Hinweises auf die Patenterteilung: **20.11.2024**
(21) Anmeldenummer: 22191707.3
(22) Anmeldetag: 23.08.2022
(51) Int. Cl.: A62C 3/02, B64D 1/16

(54) **LÖSCHFLUGZEUG**
FIREFIGHTING AIRCRAFT
AVION CONTRE LE FEU

(30) Priorität: 14.09.2021 DE 102021123793
(43) Veröffentlichungstag der Anmeldung: 15.03.2023
(73) Patentinhaber: Öncü, Zeydan, 02929 Rothenburg O. L. (DE)
(72) Erfinder: Öncü, Zeydan, 02929 Rothenburg O. L. (DE)
(74) Vertreter: Schneiders & Behrendt München

(56) Entgegenhaltungen:
- WO-A1-03/063966
- WO-A1-2011/091468
- DE-C2- 2 619 350
- US-A1- 2005 072 880

## Beschreibung

Die Erfindung betrifft ein Löschflugzeug, insbesondere zur Bekämpfung von Wald- und Buschbränden. Die Erfindung betrifft zudem ein Verfahren zum Herstellen eines Löschflugzeugs sowie ein Verfahren zum Betrieb eines Löschflugzeugs. Die Erfindung betrifft weiterhin einen Löschmittelcontainer zur Verwendung in einem Transportflugzeug.

Es hat sich gezeigt, dass Löschflugzeuge zu einem bestimmten Anteil nicht einsatzfähig sind. Es ist daher wünschenswert, die Verfügbarkeit und/oder die Zuverlässigkeit von Löschflugzeugen zu erhöhen. Es wird dazu ein, insbesondere modulares, Konzept vorgeschlagen, gemäß dem Frachtflugzeuge, Transportflugzeuge, Flugzeuge die für den Transport von Truppen und militärischem Equipment (beispielsweise gepanzerte Fahrzeuge, Ketten-Fahrzeuge, Helikopter, UNV-Drohnen) vorgesehen sind, für unterschiedliche Missionen eingesetzt werden können.

Die DE 2619350 C2 offenbart eine Einrichtung zum Löschen von Bränden aus der Luft mittels eines Transportflugzeuges mit Heckladeklappe, in welchem sich ein oder mehrere Behälter für das Löschmittel befinden und welches mindestens einen Löschmittel-Rüstsatz aufnehmen kann, wobei der Löschmittelbehälter mit einem Neigungswinkel gegenüber der horizontalen Flugzeuglängsachse von 10 bis 15 Grad nach hinten abfallend angeordnet und hinsichtlich der Verzurrvorrichtungen den üblichen Luftfrachtbehältern angepasst ist und eine Ablasseinrichtung umfasst, die aus einem Abflussrohr mit Ventil besteht, welches im Bereich der Heckladeklappe schwenkbar mit dem Löschmittelbehälter verbunden ist. Dabei ist das Abflussrohr derart mit der Heckladeklappe des Transportflugzeugs verbunden, dass beim Öffnen der Heckladeklappe in die Stellung gleichzeitig das Abflussrohr nach unten geschwenkt wird. Das Ventil des Abflussrohres ist als Schnellablassventil ausgebildet und im Bereich zwischen Abflussrohr und Löschmittelbehälter angeordnet, wobei das Schnellablassventil ein Klappventil ist, welches beim Öffnen schlagartig den gesamten Auslassquerschnitt freigibt.

Die WO 2011/091468 A1 offenbart Mittel, die es Hubschraubern und Transportflugzeugen ermöglichen, flüssige Verbindungen zum Ausräuchern, Besprühen der für einen einzigen massiven Tropfen für Zwecke wie Bewässerung, chemische Behandlung und Feuerbekämpfung zu tragen oder zu heben, ohne dass die Flugzeuge verändert werden müssen, wodurch die ursprüngliche Integrität und die Anwendungen des Flugzeugs erhalten bleiben.

Die US 2005/072880 A1 offenbart Luftausbreitungssysteme, die eine schnelle und vorübergehende Umrüstung von Flugzeugen für Luftausbreitungszwecke, wie z. B. die Brandbekämpfung aus der Luft, ermöglichen. Die Luftausbreitungssysteme können aus modularen Komponenten bestehen, die so konfiguriert werden können, dass sie mit den konventionellen Frachtbe- und -entladesystemen moderner Flugzeuge kompatibel sind, einschließlich der Seitenladesysteme von Großraum-Passagier- und Frachtflugzeugen mit hoher Hubkapazität. Die Luftausbreitungssysteme können schnell in einer großen Flotte von Flugzeugen mit hoher Kapazität installiert werden, um auf einen Flächenbrand oder einem anderen sich schnell entwickelnden Notfall wie eine Ölpest, eine chemische oder biologische Kontamination, einen Gebäude- oder Raffineriebrand usw. zu reagieren. Nach dem Einsatz können die Flugzeuge der Flotte schnell demontiert und in ihren ursprünglichen Zustand zurückversetzt werden. Die Ausbreitungssysteme können mit einer Flotte von Flugzeugen in koordinierter Weise betrieben werden, beispielsweise als Teil einer Löschflugzeugformation mit mehreren Flugzeugen, die Informationen und/oder eine gemeinsame Steuerung teilen.

Die WO 03/063966 A1 offenbart ein Verfahren zum Verhindern eines Feuers, umfassend das Verpacken einer feuerhemmenden Substanz in eine zerbrechliche Verpackung und das Abwerfen der zerbrechlichen Verpackung aus einem fliegenden Flugzeug auf das Feuer, wodurch die zerbrechliche Verpackung zerreißt und die feuerhemmende Substanz freisetzt.

Mit der Erfindung soll die Effizienz eines bekannten Löschmittelcontainers verbessert werden.

Diese Aufgabe wird gelöst mit den Merkmalen des Patentanspruchs 1. Dabei ist insbesondere ein Löschmittelcontainer zur Verwendung in einem Transportflugzeug vorgesehen, wobei der Löschmittelcontainer unter anderem eine Schleuse und einen Vorratsbereich umfasst, wobei zwischen dem Vorratsbereich und der Schleuse eine Trennwand mit einer Trennwandöffnung angeordnet ist, wobei vorgesehen ist, dass die Trennwandöffnung mittels eines Schiebers verschließbar ist.

Es ist ferner beispielsweise vorgesehen, dass dieses Flugzeug (beispielsweise ein Transportflugzeug) ohne Umrüstung am Flugzeug einen Löschcontainer wie nachfolgend ausgestaltet aufnimmt. Mittels dieses Containers ist das Flugzeug als Löschflugzeug einsetzbar. Der Container umfasst vorteilhafterweise mehrere Sektionen, deren Wasser nacheinander aus dem Flugzeug auf einen Brand geschüttet wird.

In vorteilhafter Ausgestaltung der Erfindung umfasst der Löschmittelcontainer einen Auslasskanal, wobei die Schleuse zwischen dem Auslasskanal und dem Vorratsbereich angeordnet ist. Dabei ist in weiterhin vorteilhafter Ausgestaltung der Erfindung zwischen dem Auslasskanal und der Schleuse und/oder auf einer dem Vorratsbereich abgewandten Seite der Schleuse eine verriegelbare Auslassklappe angeordnet.

Der Löschmittelcontainer hat in besonders vorteilhafter Weise eine (zumindest annähernd) zylinderförmige Form. Der Löschmittelcontainer kann aber auch jede andere Form annehmen die geeignet ist, die erforderlich Menge Löschmittel bzw. Löschwasser zu transportieren.

In vorteilhafter Ausgestaltung der Erfindung beträgt Durchmesser der verriegelbaren Auslassklappe und/oder des Löschmittelcontainers zumindest 150 cm, insbesondere zumindest 160 cm, zum Beispiel 170 cm. Es ist vorgesehen, dass der Durchmesser der verriegelbaren Auslassklappe und/oder des Löschmittelcontainers nicht mehr als 250 cm, insbesondere nicht mehr als 200 cm beträgt.

In beispielhafter Ausgestaltung hat der Löschmittelcontainer bzw. ein Kit zum Zusammensetzen des Löschmittelcontainers einen Behälterdurchmesser von 170 cm für 20 m3 (20 Kubikmeter) Löschmittel bzw. Löschwasser. Mit zunehmendem Durchmesser werden die Innenflächen des Behälters bzw. des Löschmittelcontainers stärker durch den möglichen Schwapp-Effekt und ungleichmäßigen Druck während des Fluges beeinträchtigt. Anstatt also den Durchmesser (des Behälters bzw. des Löschmittelcontainers) zu vergrößern, wurde in vorteilhafter Ausgestaltung die Länge des Behälters bzw. des Löschmittelcontainers erhöht und somit die Druckverteilung (des Löschmittels bzw. Löschwassers) optimiert.

Beispielsweise umfasst der Vorratsbereich ein Volumen von 15 m3 (15 Kubikmetern) und die Schleuse beispielsweise ein Volumen von 5 m3 (15 Kubikmetern). Um ein Schwappen in dem Vorratsbereich des Löschmittelcontainers bzw. des Behälters zu vermeiden bzw. zu verringern sind in bestimmten Abständen Separationswände als Wellenbrecher angeordnet.

Das Volumen der Schleuse beträgt beispielsweise zumindest 2 m3 (2 Kubikmeter), insbesondere zumindest 3 m3 (3 Kubikmeter). Das Volumen in der Schleuse ist vorteilhafterweise auf 5 m3 (5 Kubikmeter bzw. 5 Tonnen) Löschmittelvolumen bzw. Löschwasservolumen begrenzt.

Es ist insbesondere vorgesehen, dass sich die verriegelbare Auslassklappe (zumindest im Wesentlichen) über den gesamten Querschnitt des Löschmittelcontainers erstreckt. Es ist insbesondere vorgesehen, dass sich die verriegelbare Auslassklappe (zumindest im Wesentlichen) über mindestens 90 % des Querschnitts des Löschmittelcontainers erstreckt.

Die abschließbare und zu öffnende Frontabdeckung bzw. Auslassklappe ist so konzipiert, dass sie im gesamten Querdurchmesser (beispielsweise 170 cm) wie unten angegeben geöffnet und geschlossen werden kann. Die mittlere Abdeckung und der Verriegelungsmechanismus der Auslassklappe im Innenraum des Löschmittelcontainers können jedoch eine Öffnungsfläche bedingen, die gegenüber der Öffnungsfläche, die mit der unten beschriebenen Öffnungs- und Schließmechanik der Auslassklappe möglich ist, verringert ist. Die angegebene Lösung bzw. die Auslassklappe kann auch mit Klappenventilsystemen und ähnlichen Mechanismen verriegelt und entriegelt werden, was eine Begrenzung der Öffnungsfläche auf bis zu annähernd 90 % der Querschnittsfläche des Löschmittelcontainers bewirkt.

Es ist insbesondere vorgesehen, dass der Vorratsbereich ein Volumen umfasst, das dem zweifachen oder dreifachen des Volumens der Schleuse entspricht. Volumen in diesem Sinne ist ein Synonym für Fassungsvermögen.

In weiterhin vorteilhafter Ausgestaltung der Erfindung weist der Vorratsbereich eine oder mehrere Separationswände auf, wobei insbesondere vorgesehen ist, dass die Separationswand bzw. die Separationswände den Vorratsbereich in Sektionen unterteilt bzw. unterteilen. In weiterhin vorteilhafter Ausgestaltung der Erfindung ist vorgesehen, dass die Separationswände bzw. die Separationswand zumindest eine Flussöffnung aufweist durch die Löschmittel bzw. Löschwasser in die benachbarte Sektion fließen kann. In weiterhin vorteilhafter Ausgestaltung der Erfindung ist zudem in einer Separationswand zumindest eine Ausgleichsöffnung vorgesehen. In weiterhin vorteilhafter Ausgestaltung der Erfindung ist zudem in einer Separationswand zumindest eine Zusatzöffnung vorgesehen. Eine Flussöffnung einer Separationswand ist insbesondere in dem unteren Bereich der Separationswand vorgesehen. Eine Ausgleichseröffnung einer Separationswand ist insbesondere in dem oberen Bereich der Separationswand vorgesehen. Eine Zusatzöffnung einer Separationswand ist insbesondere in dem mittleren Bereich der Separationswand vorgesehen.

In weiterhin vorteilhafter Ausgestaltung der Erfindung umfasst der Löschmittelcontainer Räder, die von einem ersten Zustand in einen zweiten Zustand und/oder von dem zweiten Zustand in den ersten Zustand überführbar sind, wobei der Löschmittelcontainer in dem ersten Zustand von den Rädern getragen gerollt werden kann, und wobei der Löschmittelcontainer in dem zweiten Zustand auf einer Stützvorrichtung aufliegt und nicht von den Rädern getragen wird (Dolly Radmechanismus, insbesondere mit dem Einsatz einer Spindel als drehbarem Arm). Die Räder des Löschmittelcontainers (der Dolly-Radmechanismus) werden verwendet, wenn der Löschmittelcontainer bzw. das Kit (der Bausatz) in das Flugzeug geladen und vom Flugzeug zum Transportfahrzeug zurückgebracht wird. Die Erfindung betrifft weiterhin ein Löschflugzeug, das ein Transportflugzeug mit einer Heckladeklappe und einen über die Heckladeklappe (auch als Rampe bzw. Laderampe bezeichnet) aus dem Transportflugzeug entnehmbaren Löschmittelcontainer mit einem oder mehreren der vorgenannten Merkmale, aufweist.

In weiterhin vorteilhafter Ausgestaltung der Erfindung ist der Löschmittelcontainer derart in dem Transportflugzeug platziert und/oder fixiert, dass sich Löschmittel und/oder Löschwasser aus der Schleuse und/oder aus dem Löschmittelcontainer über die geöffnete Heckladeklappe (Rampe bzw. Laderampe) ergießt. In weiterhin vorteilhafter Ausgestaltung der Erfindung ist die Heckladeklappe mittels eines Scharniers mit dem Rumpf des Transportflugzeugs verbunden, wobei der Löschmittelcontainer derart in dem Transportflugzeug platziert und/oder fixiert ist, dass sich das Löschmittel und/oder Löschwasser aus der Schleuse und/oder dem Löschmittelcontainer nicht über das Scharnier und/oder einen Aktor oder Mechanismus zum Öffnen bzw. zum Schließen der Heckladeklappe ergießt.

Die Erfindung betrifft weiterhin ein Verfahren zur Herstellung eines Löschflugzeugs mit einem oder mehreren der vorgenannten Merkmale, wobei der Löschmittelcontainer mittels einer Zugvorrichtung, beispielsweise umfassend eine Winde und/oder ein Seil und/oder ein Stahlseil, über die geöffnete Heckladeklappe in einen oder den Frachtraum des Transportflugzeugs gezogen wird, wobei der Löschmittelcontainer auf Rädern des Löschmittelcontainers und/oder auf den Rädern des Löschmittelcontainers rollt. Dabei sind die Räder in vorteilhafter Ausgestaltung in ihrem ersten Zustand. Wenn der Löschmittelcontainer die gewünschte Position in dem Frachtraum des Transportflugzeugs erreicht hat, werden die Räder von ihrem ersten Zustand in ihren zweiten Zustand überführt.

Gemäß einem oder dem Verfahren zur Herstellung eines Löschflugzeugs ist ein gepanzertes Fahrzeug mittels einer Gruppe von Verankerungen in einem Flugzeug bzw. Transportflugzeug fixiert, wobei die Fixierung gelöst wird, wobei das gepanzerte Fahrzeug aus dem Flugzeug bzw. Transportflugzeug entfernt wird, wobei ein oder der Löschmittelcontainer für Löschwasser in dem Flugzeug bzw. Transportflugzeug angeordnet wird, wobei der Löschmittelcontainer mittels zumindest einer, insbesondere zumindest zweier, insbesondere zumindest dreier, insbesondere zumindest vier, insbesondere zumindest fünf, insbesondere zumindest aller, der Gruppe der Verankerungen fixiert wird.

Die Erfindung betrifft weiterhin ein Verfahren zum Betrieb eines Löschflugzeugs mit einem oder mehreren der vorgenannten Merkmale. Dabei wird zunächst vorteilhafter Weise der Löschmittelcontainer im Frachtraum des Transportflugzeugs mit Löschmittel und/oder Löschwasser gefüllt. Dazu wird in vorteilhafter Ausgestaltung ein Tanklöschfahrzeug verwendet, wobei aus dem Tank des Tanklöschfahrzeugs Löschmittel bzw. Löschwasser in den Löschmittelcontainer gefüllt wird. Dabei ist vorteilhafterweise vorgesehen, dass die Schleuse und/oder der Vorratsbereich mit Löschmittel bzw. Löschwasser gefüllt wird bzw. ist.

In weiterer Ausgestaltung hebt das den mit Löschmittel bzw. Löschwasser befüllten Löschmittelcontainer transportierende Löschflugzeug (mit geschlossener Heckladeklappe) vom Boden der Ausgangsbasis ab und fliegt zu dem Einsatzort, d. h. dem Ort, an dem Löschmittel bzw. Löschwasser eingesetzt werden soll, beispielsweise zum Löschen eines Brandes. Vor Erreichen des Einsatzortes wird die Heckladeklappe in beispielhafter Ausgestaltung geöffnet. Bei Erreichen des Einsatzortes wird das Löschflugzeug derart ausgerichtet, dass Löschmittel bzw. Löschwasser in der Schleuse gegen die Auslassklappe drückt. Diese wird in weiterhin vorteilhafter Ausgestaltung der Erfindung entriegelt, so dass Löschmittel bzw. Löschwasser die Auslassklappe aufdrückt, sich insbesondere über den Auslasskanal und die Heckladeklappe ergießt und das Löschflugzeug über die Heckladeklappe verlässt (und auf den Boden fällt). In weiterhin beispielhafter Ausgestaltung der Erfindung ist vorgesehen, dass das Löschflugzeug nach (insbesondere vollständigem oder im wesentlichen vollständigem) Entleeren der Schleuse derart ausgerichtet wird, dass sich die Auslassklappe schließt. Diese wird in weiterhin vorteilhafter Ausgestaltung der Erfindung verriegelt. Zudem wird in beispielhafter Ausgestaltung der Erfindung die Heckladeklappe geschlossen. Dem Verriegeln der Auslassklappe folgt ein Öffnen des Schiebers, sodass Löschmittel bzw. Löschwasser aus dem Vorratsbereich in die Schleuse strömen kann bzw. strömt. Dabei wird das Löschflugzeug insbesondere derart ausgerichtet, dass die Schleuse im gewünschten Ausmaß bzw. (fast) vollständig mit Löschmittel bzw. Löschwasser gefüllt wird. Danach wird in weiterhin vorteilhafter Ausgestaltung die Trennwandöffnung der Trennwand mittels des Schiebers geschlossen.

Der Einsatzort wird erneut angeflogen. In alternativer Ausgestaltung kann auch ein anderer Einsatzort angeflogen werden. Vor Erreichen des Einsatzortes wird die Heckladeklappe in beispielhafter Ausgestaltung geöffnet. Bei Erreichen des gewünschten Einsatzortes wird das beschriebene Procedere wiederholt. So wird bei Erreichen des Einsatzortes das Löschflugzeug derart ausgerichtet, dass Löschmittel bzw. Löschwasser in der Schleuse gegen die Auslassklappe drückt. Diese wird in weiterhin vorteilhafter Ausgestaltung der Erfindung entriegelt, so dass Löschmittel bzw. Löschwasser die Auslassklappe aufdrückt, sich insbesondere über den Auslasskanal und die Heckladeklappe ergießt und das Löschflugzeug verlässt (und auf den Boden fällt). In weiterhin beispielhafter Ausgestaltung der Erfindung ist vorgesehen, dass das Löschflugzeug nach Entleeren der Schleuse derart ausgerichtet werden, dass sich die Auslassklappe schließt. Diese wird in weiterhin vorteilhafter Ausgestaltung der Erfindung (im geschlossenen Zustand) verriegelt. Zudem wird in beispielhafter Ausgestaltung der Erfindung die Heckladeklappe geschlossen. Dem Verriegeln der Auslassklappe folgt ein Öffnen des Schiebers, sodass Löschmittel bzw. Löschwasser aus dem Vorratsbereich in die Schleuse strömen kann bzw. strömt. Dabei wird das Löschflugzeug insbesondere derart ausgerichtet, dass die Schleuse im gewünschten Ausmaß bzw. (fast) vollständig mit Löschmittel bzw. Löschwasser gefüllt wird. Danach wird in weiterhin vorteilhafter Ausgestaltung die Trennwandöffnung der Trennwand mittels des Schiebers geschlossen.

Soll der Löschvorgang fortgesetzt werden so wird der Einsatzort erneut bzw. ein weiterer bzw. anderer Einsatzort angeflogen. Vor Erreichen des Einsatzortes wird die Heckladeklappe in beispielhafter Ausgestaltung geöffnet. Bei Erreichen des gewünschten Einsatzortes wird das beschriebene Procedere wiederholt. So wird bei Erreichen des Einsatzortes das Löschflugzeug derart ausgerichtet, dass Löschmittel bzw. Löschwasser in der Schleuse gegen die geschlossene Auslassklappe drückt. Diese wird in weiterhin vorteilhafter Ausgestaltung der Erfindung entriegelt, so dass Löschmittel bzw. Löschwasser die Auslassklappe aufdrückt, sich insbesondere über den Auslasskanal und die Heckladeklappe ergießt und das Löschflugzeug verlässt (und auf den Boden fällt). In weiterhin beispielhafter Ausgestaltung der Erfindung ist vorgesehen, dass das Löschflugzeug nach (vollständigem bzw. im wesentlichen vollständigen) Entleeren der Schleuse derart ausgerichtet wird, dass sich die Auslassklappe schließt. Diese wird in weiterhin vorteilhafter Ausgestaltung der Erfindung im geschlossenen Zustand verriegelt. Zudem wird in beispielhafter Ausgestaltung der Erfindung die Heckladeklappe geschlossen.

Befindet sich nicht ausreichend Löschmittel bzw. Löschwasser in dem Vorratsbereich, wird der Einsatz abgebrochen und das Löschflugzeug kehrt in vorteilhafter Ausgestaltung an den Boden (der Ausgangsbasis) zurück. Ist jedoch noch ausreichend Löschmittel bzw. Löschwasser für einen weiteren Einsatz im Vorratsbereich vorhanden und soll der Einsatz fortgesetzt werden, so folgt ein Öffnen des Schiebers, so dass Löschmittel bzw. Löschwasser aus dem Vorratsbereich in die Schleuse strömen kann. Dabei wird das Löschflugzeug insbesondere derart ausgerichtet, dass die Schleuse im gewünschten Ausmaß bzw. fast vollständig mit Löschmittel bzw. Löschwasser gefüllt wird. Danach wird in weiterhin vorteilhafter Ausgestaltung die Trennwandöffnung der Trennwand mittels des Schiebers geschlossen. Vor dem Erreichen des Einsatzortes erfolgt ein Öffnen der Heckladeklappe und bei Erreichen des Einsatzortes wiederum das beschriebene Entriegeln der Auslassklappe, damit Löschmittel bzw. Löschwasser das Löschflugzeug verlassen kann (um auf den Boden zu fallen).

Die Auslassklappe ist insbesondere manuell mittels eines Betätigungshebels entriegelbar und verriegelbar. Der Schieber der Trennwand ist insbesondere manuell mittels eines Schieber-Betätigungselements, beispielsweise einer Kurbel, verstellbar. Das Schieber-Betätigungselement (die Kurbel) und der Betätigungshebel sind derart benachbart angeordnet, dass ein Bediener von einem Standpunkt aus sowohl den Betätigungshebel als auch das Schieber-Betätigungselement (die Kurbel) manuell betätigen kann.

In weiterhin vorteilhafter Ausgestaltung der Erfindung beträgt die Öffnungsfläche der Trennwandöffnung nicht mehr als 40 %, insbesondere nicht mehr als 30 %, der Querschnittsfläche des Löschmittelcontainers (beispielsweise im Bereich der Trennwand).

In weiterhin vorteilhafter Ausgestaltung der Erfindung beträgt die Öffnungsfläche der Flussöffnung nicht mehr als 30 %, insbesondere nicht mehr als 20 %, insbesondere nicht mehr als 10 %, der Querschnittsfläche des Löschmittelcontainers (beispielsweise an der Stelle der Separationswand).

Vorteilhafterweise umfassen die Separationswände jeweils einen Schließmechanismus. Für die Öffnung des Schließmechanismus der Separationswände wird ein doppelt exzentrisches Ventile-System eingesetzt, das den Durchmesser des Löschmittelaustritts bzw. Löschwasseraustritts ändert. Dieses System kann den Löschmittelfluss bzw. Löschwasserfluss in vertikaler Richtung unterbrechen und öffnen. Hierzu sind die Unterdruckeffekte beim Entladen bzw. Entleeren bzw. Leeren des Löschmittelcontainers bzw. Kits bzw. Bausatzes berücksichtigt worden.

In einer Ausgestaltung der Erfindung weist der Löschmittelcontainer eine Verankerung bzw. ein Kopplungselement auf, mittels dessen der Löschmittelcontainer an eine Zugvorrichtung (Seilwinde, "hoist", beispielsweise umfassend eine Winde und/oder ein Seil und/oder ein Stahlseil) des Transportflugzeugs ankoppelbar ist. In weiterhin vorteilhafter Ausgestaltung der Erfindung wird der Löschmittelcontainer mittels der Zugvorrichtung (Seilwinde, "hoist", beispielsweise umfassend eine Winde und/oder ein Seil und/oder ein Stahlseil) in einen oder den Frachtraum des Transportflugzeugs bzw. des Löschflugzeugs gezogen. Es ist vorteilhafterweise zudem vorgesehen, dass der Löschmittelcontainer im Transportflugzeug bzw. in dem oder einem Frachtraum des Transportflugzeugs (das durch die Aufnahme des Löschcontainers im Sinne der hier verwendeten Terminologie ein Löschflugzeug ist) mittels Verankerungen in dem Transportflugzeug fixiert ist, die in dem Transportflugzeug, beispielsweise für die Verankerung von Kettenfahrzeugen, vorgesehen sind.

Da die Container (Vorratsbereich, Schleuse) hintereinander sind wird erst der hinterste Container (Schleuse) über die Rampe entleert. Dadurch ist der Schwerpunkt des Flugzeuges (Löschflugzeugs bzw. Transportflugzeugs) in keinster Hinsicht beeinflusst, weil die Schwerpunkt (Flugzeugschwerpunkt, C. o. G. (Center of Gravity)) Wanderung stabil gehalten ist und die Flugzeuge (Löschflugzeuge bzw. Transportflugzeuge) dafür ausgelegt sind.

Der Flugzeugschwerpunkt, C. o. G. (Center of Gravity), gilt im Sinne dieser Offenbarung, insbesondere bei der Abgabe von Wasser zwecks Löschens, dann als nicht bewegt, weil die Ausleerung der Containers von innen nach außen über die Rampe geschieht, wofür das Flugzeug ausgelegt ist.

Wenn ein kontrolliertes Ablassen von Löschmittel bzw. Löschwasser gefordert wird ist es möglich, dass das Löschmittel bzw. Löschwasser in einer Menge von 5 Tonnen abgelassen werden kann. Diese Flexibilität ist gegeben. Es sind keine gravierenden Änderungen im Schwerpunkt des Löschflugzeuges, da es für solche Missionen ausgelegt ist.

Der Löschmittelcontainer wird in vorteilhafter Ausgestaltung als Kit bzw. als "plug & play" Lösung bereitgestellt.

Der Löschmittelcontainer ist in vorteilhafter Ausgestaltung (im wesentlichen) zylindrisch, (im wesentlichen) zylinderartig bzw. (im wesentlichen) in der Form eines Zylinders ausgestaltet und/oder geformt.

Das Endelement des Löschmittelcontainers (verschließt den annähernd zylinderförmigen Löschmittelcontainer an der der Auslassklappe gegenüberliegenden Seite) und/oder die Seitenwandung bzw. der Mantel des Löschmittelcontainers können beispielsweise Aluminium, Stahl oder Kunststoff ausgeführt sein. Es hat sich jedoch als vorteilhaft erwiesen, das Endelement und die Seitenwandung bzw. den Mantel des Löschmittelcontainers aus Aluminium auszuführen. Es hat sich zudem als vorteilhaft erwiesen, die Stützvorrichtungen aus Aluminium auszuführen. Dagegen sind Verschlussmechaniken und Verriegelungen vorteilhafterweise aus Stahl ausgeführt.

Der Flugzeugschwerpunkt/Transportflugzeugschwerpunkt, C. o. G. (Center of Gravity), gilt im Sinne dieser Offenbarung, insbesondere bei der Abgabe von Wasser zwecks Löschens, dann als nicht bewegt, weil die Ausleerung der Containers (Schleuse, Vorratsbereich) von innen nach außen über die Rampe geschieht, wofür das Flugzeug/Transportflugzeug ausgelegt ist.

Der Löschmittelcontainer ist in vorteilhafter Ausgestaltung der Erfindung mit Spanngurten fixiert. Dabei ist insbesondere vorgesehen, dass die Spanngurte flugzeugseitig an Befestigungsvorrichtungen im Flugzeugboden des Frachtraums des Transportflugzeugs befestigt sind.

Aluminium im Sinne dieser Offenbarung ist insbesondere 5182 Aluminium. Ein Transportflugzeug im Sinne dieser Offenbarung ist insbesondere ein Flugzeug/Transportflugzeug mit einem Frachtraum, der über eine Heckladeklappe zugänglich ist. Ein Transportflugzeug im Sinne dieser Offenbarung ist insbesondere ein Propellerflugzeug. Beispiele für Transportflugzeug im Sinne dieser Offenbarung sind A400M, C-130, C-125 und CN235.

Separationswände im Sinne dieser Offenbarung sind insbesondere Wellenbrecher.

Löschmittel im Sinne dieser Offenbarung ist insbesondere Löschwasser.

Vorteile und Einzelheiten ergeben sich aus der nachfolgenden Beschreibung von Ausführungsbeispielen. Dabei zeigen:
- Fig. 1: ein Ausführungsbeispiel eines Löschflugzeugs kurz vor dem Erreichen des Einsatzortes in einer Aufrissdarstellung, wobei das Löschflugzeug ein Transportflugzeug umfasst, in dem ein Löschmittelcontainer angeordnet ist, der durch die Aufrissdarstellung sichtbar ist,
- Fig. 2: einen perspektivischen Ausschnitt des Löschflugzeugs gemäß Fig. 1 zur Erläuterung der Platzierung bzw. Fixierung des Löschmittelcontainers in einem Frachtraum des Transportflugzeugs,
- Fig. 3: eine perspektivische Darstellung des Löschmittelcontainers gemäß Fig. 2,
- Fig. 4: eine Aufrissdarstellung des Löschmittelcontainers gemäß Fig. 2,
- Fig. 5: ein Ausführungsbeispiel für eine Separationswand des Löschmittelcontainers gemäß Fig. 2 als Ausschnitt einer technischen Zeichnung,
- Fig. 6: ein Ausführungsbeispiel für einen Auslasskanal des Löschmittelcontainers gemäß Fig. 2,
- Fig. 7: ein Ausführungsbeispiel einer Trennwand zwischen einer Schleuse und eines Vorratsbereichs des Löschmittelcontainers gemäß Fig. 2,
- Fig. 8: ein Ausführungsbeispiel einer Verschlussplatte für eine Trennwand gemäß Fig. 7 als Ausschnitt einer technischen Zeichnung,
- Fig. 9: ein Ausführungsbeispiel eines Schiebers für eine Trennwand gemäß Fig. 7 als Ausschnitt einer technischen Zeichnung in zwei Ansichten,
- Fig. 10: ein Ausführungsbeispiel einer verriegelbaren Auslassklappe zwischen einer Schleuse und einem Vorratsbereich des Löschmittelcontainers gemäß Fig. 4,
- Fig. 11: ein Ausführungsbeispiel einer Ver- und Entriegelungsplatte für eine verriegelbare Auslassklappe gemäß Fig. 10 als Ausschnitt einer technischen Zeichnung in zwei Ansichten,
- Fig. 12: ein Ausführungsbeispiel eines Ver- und Entriegelungsmechanismus für eine verriegelbare Auslassklappe gemäß Fig. 10,
- Fig. 13: ein Ausführungsbeispiel eines Verschlusses für eine Wassereinlassöffnung des Löschmittelcontainers gemäß Fig. 3,
- Fig. 14: den Verschluss gemäß Fig. 13 als Ausschnitt einer technischen Zeichnung in zwei Ansichten,
- Fig. 15: ein Ausführungsbeispiel für Räder des Löschmittelcontainers in einem ersten Zustand,
- Fig. 16: die Räder gemäß Fig. 15 einen zweiten Zustand,
- Fig. 17: eine Seitenansicht auf das Verladen des Löschmittelcontainers in ein Transportflugzeug gemäß Fig. 1,
- Fig. 18: die Situation gemäß Fig. 17 in einer perspektivischen Draufsicht von hinten, und

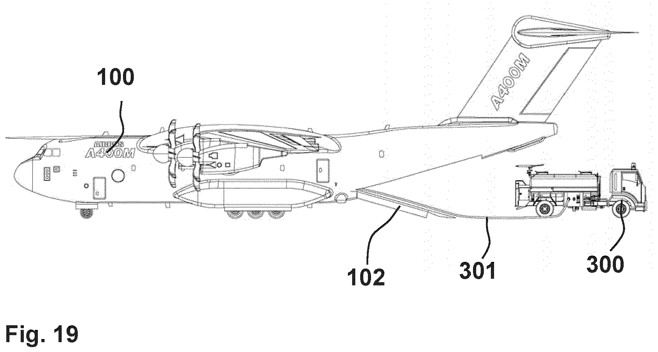

- Fig. 19: eine Seitenansicht auf das Befüllen des Löschmittelcontainers in ein Transportflugzeug gemäß Fig. 1.

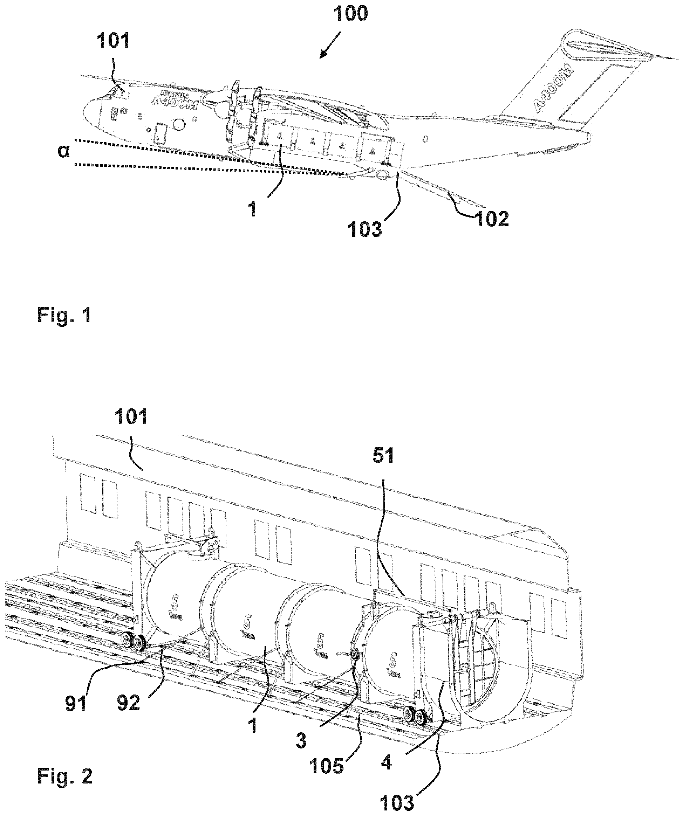

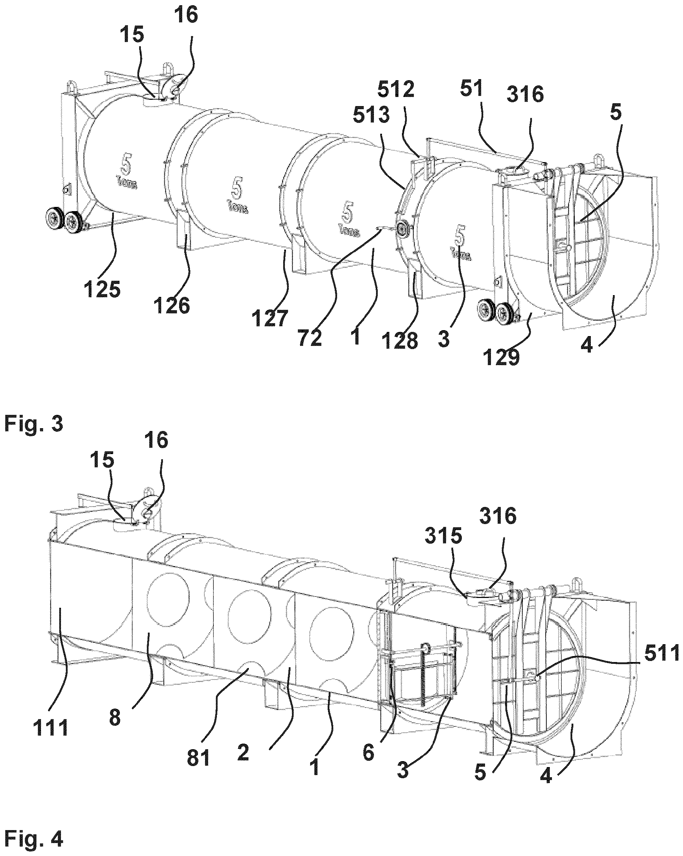

Fig. 1 zeigt ein Löschflugzeug 100 in einer Aufrissdarstellung, wobei das Löschflugzeug 100 ein Transportflugzeug 101 umfasst, in dem ein Löschmittelcontainer 1 angeordnet ist, der durch die Aufrissdarstellung sichtbar ist. Fig. 2 zeigt einen perspektivischen Ausschnitt des Löschflugzeugs 100 zur Erläuterung der Platzierung bzw. Fixierung des Löschmittelcontainers 1 im Frachtraum des Transportflugzeugs 101. Fig. 3 zeigt eine perspektivische Darstellung des Löschmittelcontainers 1, und Fig. 4 zeigt eine Aufrissdarstellung des Löschmittelcontainers 1.

Der Löschmittelcontainer 1 weist annähernd die Form eines Zylinders auf und ist aus Aluminium gefertigt. Der Löschmittelcontainer 1 ist an seinem einen Ende durch ein Endelement 111 verschlossen. Das Endelement 111 ist annähernd kreisförmig ausgeführt und weist eine Fläche auf, die im Folgenden als Querschnittsfläche des Löschmittelcontainers 1 bezeichnet wird.

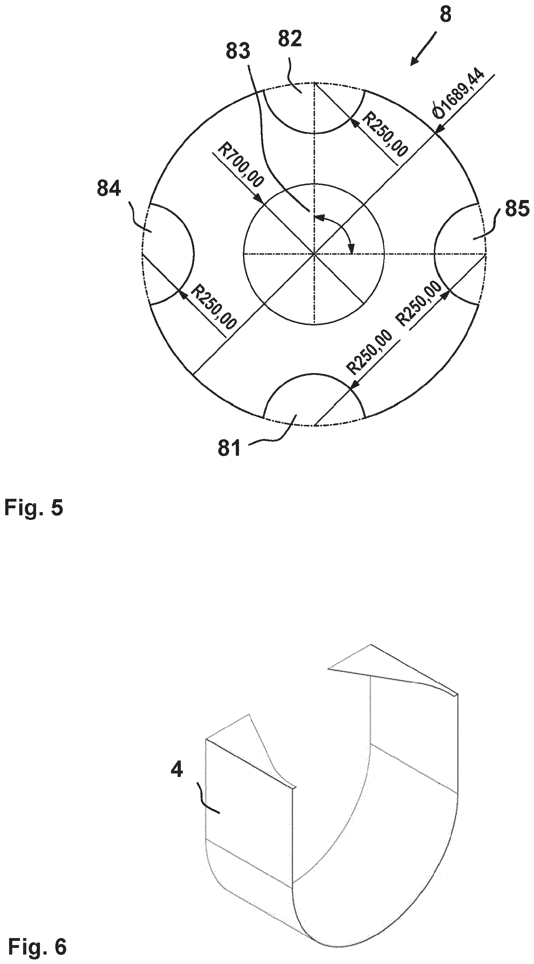

Der Löschmittelcontainer 1 umfasst einen in Fig. 6 vereinzelt dargestellten Auslasskanal 4, eine Schleuse 3 und einen Vorratsbereich 2. Die Schleuse 3 ist zwischen dem Auslasskanal 4 und dem Vorratsbereich 2 angeordnet. Im Vorratsbereich 2 sind Separationswände 8 angeordnet, die den Vorratsbereich 2 in Segmente unterteilen.

Fig. 5 zeigt eine Ausgestaltung einer Separationswand 8, die im unteren Bereich eine im unteren Bereich des Löschmittelcontainers angeordnete Flussöffnung 81 sowie eine im oberen Bereich des Löschmittelcontainers 1 angeordnete Ausgleichsöffnung 82 umfasst. Zudem sind im vorliegenden Ausführungsbeispiel im mittleren Bereich des Löschmittelcontainers 1 (also zwischen oben und unten) eine Zusatzöffnung 83, eine Zusatzöffnung 84 und eine Zusatzöffnung 85 vorgesehen. In dem dargestellten Ausführungsbeispiel beträgt die Öffnungsfläche der Flussöffnung 81 in etwa 4 % der Querschnittsfläche des Löschmittelcontainers 1 (im Bereich der Separationswand 8).

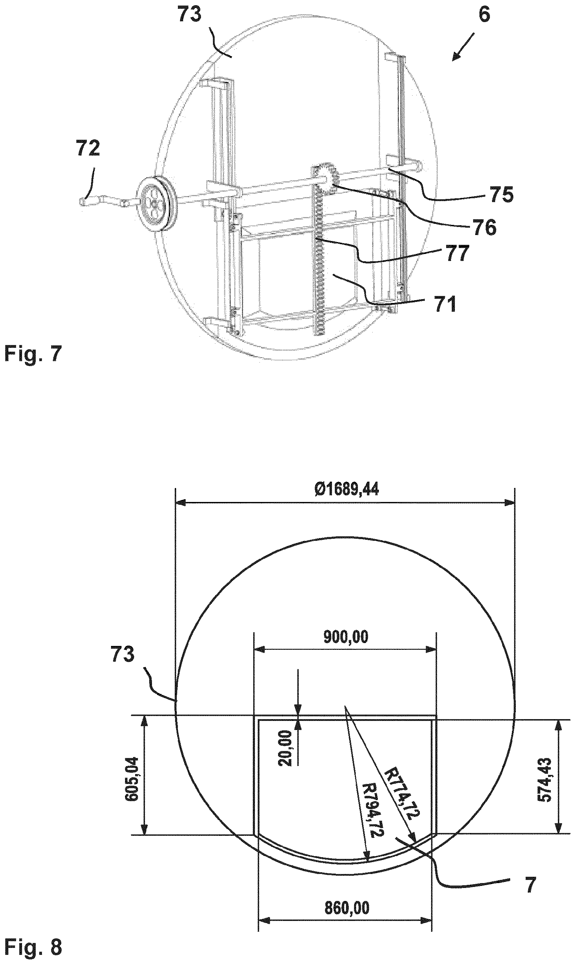

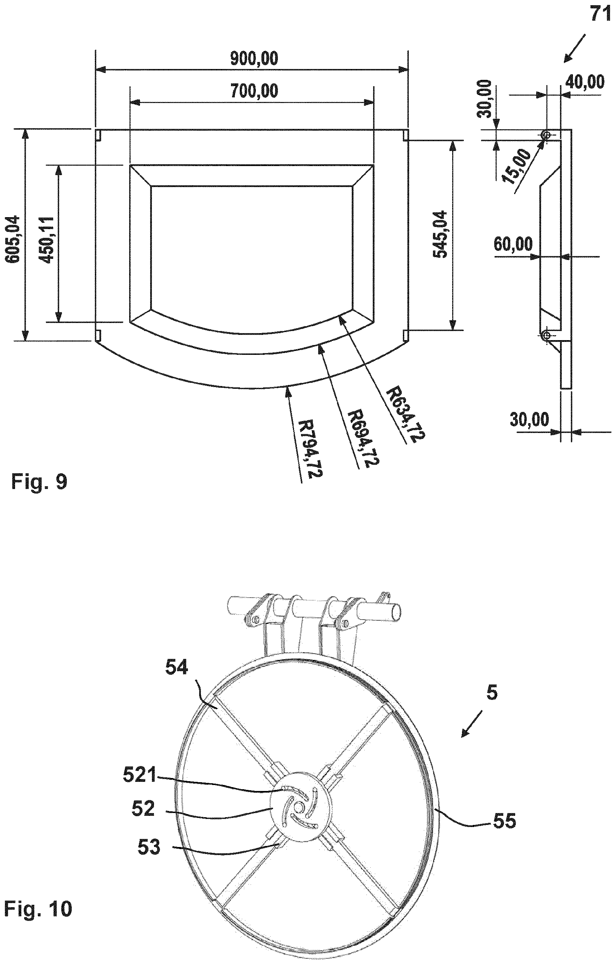

Zwischen der Schleuse 3 und dem Vorratsbereich 2 ist eine in Fig. 7 detailliert dargestellte Trennwand 6 vorgesehen, die eine in Fig. 8 detailliert dargestellte Basisplatte 73 mit einer Trennwandöffnung 7 umfasst. Die Trennwandöffnung 7 ist mittels eines in Fig. 9 detailliert dargestellten Schiebers 71 verschließbar. Zum Öffnen und Verschließen der Trennwandöffnung 7 ist als Betätigungselement eine Kurbel 72 vorgesehen, mittels der ein Zahnrad 76 mittels einer Welle 75 drehbar. Das Zahnrad 76 ist in Eingriff mit einer Zahnstange 77, so dass durch Drehen der Kurbel 72 der Schieber 71 in zwei Richtungen, hoch und runter, verfahrbar ist.. In dem dargestellten Ausführungsbeispiel beträgt die maximale Öffnungsfläche der Trennwandöffnung 7 in etwa 25 % der Querschnittsfläche des Löschmittelcontainers 1 (im Bereich der Trennwand 7) und/oder der Fläche einer nachfolgend beschriebenen verriegelbaren Auslassklappe 5

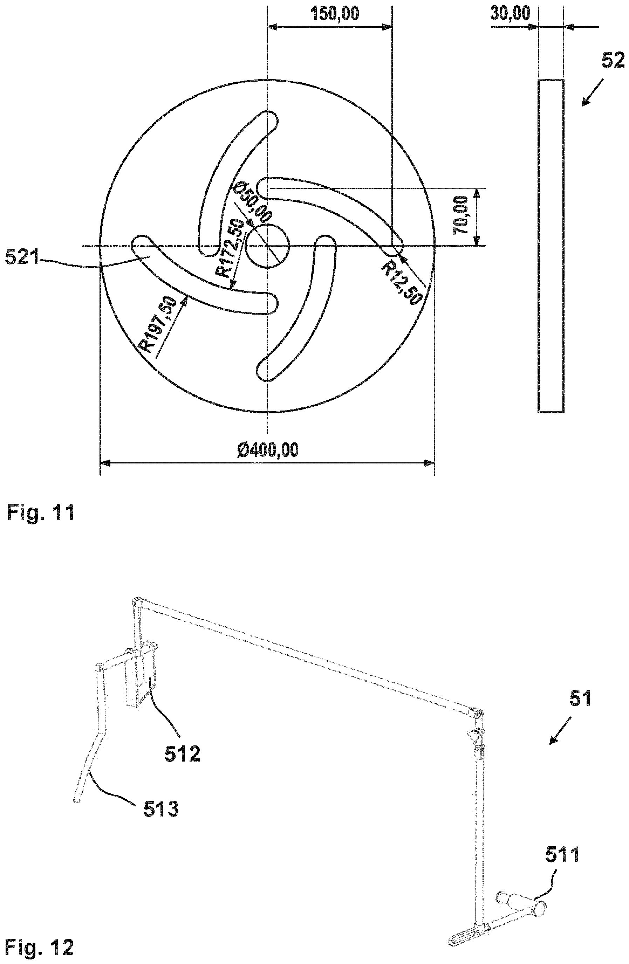

Zwischen dem Auslasskanal 4 und der Schleuse 3 ist eine verriegelbare Auslassklappe 5 angeordnet, die in Fig. 10 detailliert dargestellt ist. Die Auslassklappe 5 umfasst eine Dichtung 55. Die Auslassklappe 5 ist manuell mittels eines Betätigungshebels 513 verrriegelbar und entriegelbar. Der Betätigungshebel 513 ist Teil eines in Fig. 12 detailliert dargestellten Ver- und Entriegelungsmechanismus 51, der zudem ein an der Außenwand des Löschmittelcontainers 1 fixiertes Führungselements 512 sowie einen Zapfen 511 aufweist. Der Zapfen 511 steht in Eingriff mit einer in Fig. 10 und Fig. 11 dargestellten Ver- und Entriegelungsplatte 52, die Führungsaussparungen 521 aufweist. In diese Führungsaussparungen 521 sind nicht näher dargestellte Zapfen von mit Bezugszeichen 54 bezeichneten Ver- und Entriegelungsarmen 54 angeordnet. Die Ver- und Entriegelungsarme 54 sind in Führungsprofilen 53 geführt. Mittels des (manuellen) Betätigungshebels 513 kann aufgrund des beschriebenen Mechanismus die Ver- und Entriegelungsplatte 52 gedreht werden, sodass je nach Richtung der Drehung die Auslassklappe 5 entriegelt oder verriegelt wird.

Der Auslasskanal 4 überdeckt (wenn der Löschmittelcontainer 1 im Transportflugzeug 101 fixiert ist) das Scharnier 103 der Heckladeklappe 102 des Transportflugzeugs 101. Überdeckt im Sinne dieser Offenbarung bedeutet insbesondere, dass kein Löschmittel bzw. Löschwasser auf das Scharnier 103 der Heckladeklappe 102 des Transportflugzeugs 101 fließt, wenn der in dem Löschflugzeug 100 angeordnete Löschmittelcontainer 1 bzw. die Schleuse 3 (zumindest teilweise) entleert wird.

Die Auslassklappe 5 umfasst im vorliegenden Ausführungsbeispiel im Wesentlichen die gesamte Querschnittsfläche des Löschmittelcontainers 1 im Bereich der Auslassklappe 5.

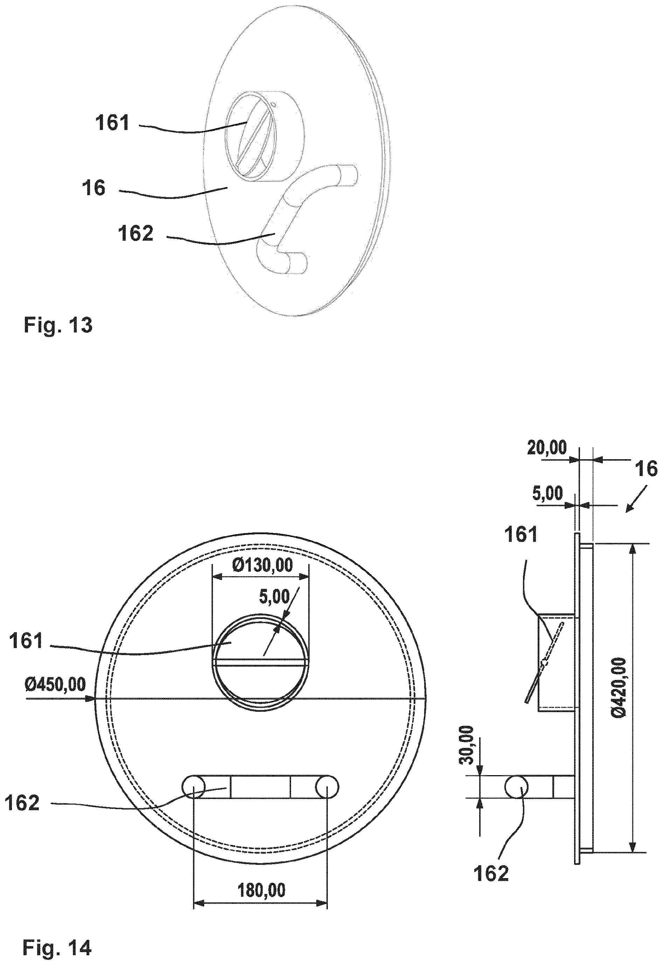

Der Löschmittelcontainer 1 umfasst im Vorratsbereich 2 eine Wassereinlassöffnung 15, die mit einem in Fig. 13 und Fig. 14 detailliert dargestellten Verschluss 16 verschließbar ist bzw. verschlossen werden kann. Der Verschluss 16 weist eine Entlüftungsklappe 161 und einen Eingriff 162 auf. Die Schleuse 3 umfasst eine entsprechend der Wassereinlassöffnung 15 ausgestaltete Wassereinlassöffnung 315, die mit einem dem Verschluss 16 entsprechenden Verschluss 316 verschließbar ist bzw. verschlossen werden kann.

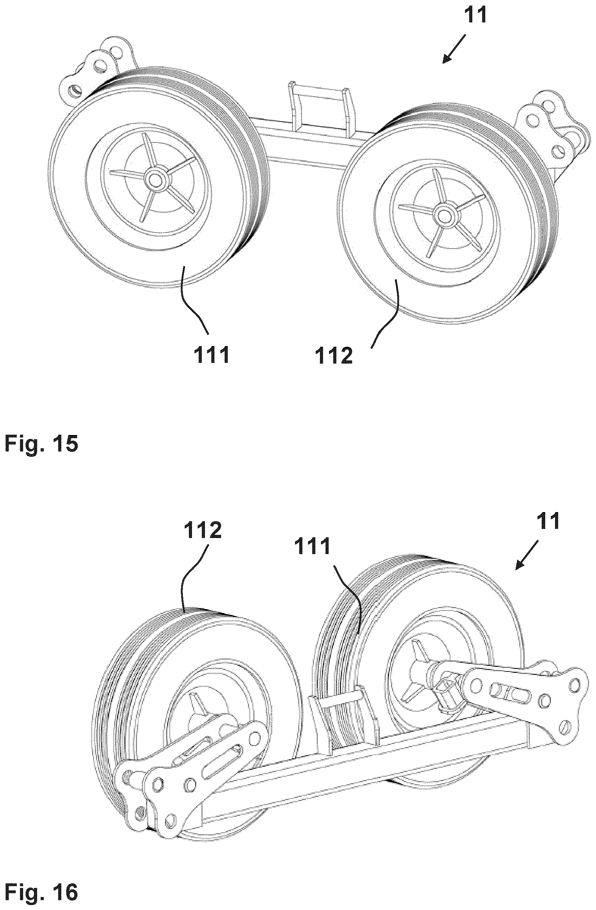

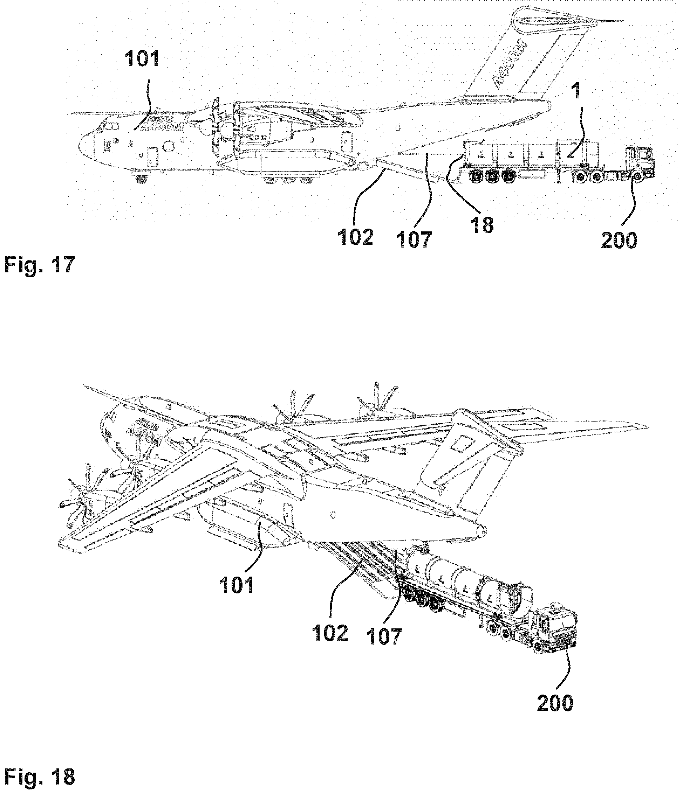

Der Löschmittelcontainer 1 umfasst einen in Fig. 15 und Fig. 16 dargestellten Rollmechanismus 11 mit umklappbaren Rädern 111 und 112, die in zwei Zuständen angeordnet sein können. Der Löschmittelcontainer 1 kann auf den Rädern 111 und 112 rollen, wenn sich die Räder 111 und 112 in dem in Fig. 15 dargestellten ersten Zustand befinden. Dagegen wird der Löschmittelcontainer 1 nicht von den Rädern 111 und 112 sondern von Stützvorrichtungen 125, 126, 127, 128 und 129 getragen, wenn sich die Räder 111 und 112 in dem in Fig. 16 dargestellten zweiten Zustand befinden. Der erste Zustand der Räder 111 und 112 ist vorgesehen, um den Löschmittelcontainer wie nachfolgend unter Bezugnahme auf Fig. 17 und Fig. 18 beschrieben in den oder einen Frachtraum des Transportflugzeug 101 zu bewegen.

Fig. 17 und 18 beschreiben die Herstellung eines Löschflugzeugs 100 durch die Aufnahme eines Löschmittelcontainers 1 in einen oder den Frachtraum des Transportflugzeugs 101. Der Löschmittelcontainer 1 umfasst zumindest ein Kopplungselement 18, mittels dessen der Löschmittelcontainer 1 an eine nicht näher dargestellte Zugvorrichtung (Seilwinde, "hoist", beispielsweise umfassend eine Winde und/oder ein Seil und/oder ein Stahlseil) des Transportflugzeugs 101 ankoppelbar ist. In dem vorliegenden Ausführungsbeispiel wird dazu ein Stahlseil 107, das zu einer Winde des Transportflugzeugs 101 gehört, mit dem Kopplungselement 18 verbunden. Anschließend wird der Löschmittelcontainer 1 mittels der Winde von einem Transportfahrzeug 200 über die Heckladeklappe 102 in den Frachtraum des Transportflugzeugs 101 gezogen. Wenn der Löschmittelcontainer 1 die gewünschte Position in dem oder einem Frachtraum des Transportflugzeuges 101 erreicht hat, werden die Räder 111 und 112 des Rollmechanismus 11 in den zweiten Zustand überführt, sodass der Löschmittelcontainer 1 mit den Schutzvorrichtungen 125, 126, 127, 128, 129 auf dem Flugzeugboden des Transportflugzeugs 101 aufliegt. Der Löschmittelcontainer 1 wird mittels Verankerungen im Transportflugzeug 101 fixiert, die in dem Transportflugzeug 101, beispielsweise für die Verankerung von Kettenfahrzeugen, vorgesehen sind. In dem vorliegenden Ausführungsbeispiel sind dazu Spanngurte 91, die an Befestigungselementen 92 im Boden des Frachtraums des Transportflugzeugs 101 fixiert sind, vorgesehen, die an dem Löschmittelcontainer 1 befestigt werden, so dass dieser fest in und an dem Transportflugzeug 101 fixiert ist.

Zum Betrieb des Löschflugzeugs 100 ist im vorliegenden Ausführungsbeispiel vorgesehen, dass Löschmittel bzw. Löschwasser mittels eines Tanklöschfahrzeugs 300 über einen Schlauch 301 durch die Wassereinlassöffnung 15 bzw. 315 in den Löschmittelcontainer 1 eingebracht wird. Dabei ist in vorteilhafterweise vorgesehen, dass die Trennwandöffnung 7 geöffnet ist, sodass die Schleuse 3 und/oder der Vorratsbereich 2 mit Löschmittel bzw. Löschwasser gefüllt sind bzw. werden bzw. befüllbar sind. Anschließend wird in dem vorliegenden Ausführungsbeispiel die Heckladeklappe 102 des Löschflugzeugs 100 geschlossen.

In weiterer Ausgestaltung hebt das Löschflugzeug 100 vom Boden der Ausgangsbasis ab und fliegt zu dem Einsatzort, d. h. dem Ort, an dem Löschmittel bzw. Löschwasser eingesetzt werden soll, beispielsweise zum Löschen eines Brandes. Bei Erreichen des Einsatzortes wird das Löschflugzeug 100 derart ausgerichtet, dass Löschmittel bzw. Löschwasser in der Schleuse 3 auf die Auslassklappe 5 drückt. Außerdem wird die Heckladeklappe 102 geöffnet. Diese Situation ist in Fig. 1 dargestellt, wobei die Ausrichtung des Löschflugzeugs 100 durch den Winkel α (angle of attack), der im Ausführungsbeispiel in etwa 8 Grad (8°) (gegenüber der Horizontalen) beträgt, definiert ist.

Die Auslassklappe 5 wird in weiterhin vorteilhafter Ausgestaltung der Erfindung entriegelt, so dass Löschmittel bzw. Löschwasser die Auslassklappe 5 aufdrückt und sich insbesondere über den Auslasskanal und die Heckladeklappe ergießt und das Löschflugzeug 100 verlässt (und auf den Boden fällt). Es ist insbesondere vorgesehen, dass nach Entleeren der Schleuse 3 das Löschflugzeug 100 derart ausgerichtet wird, dass die Auslassklappe 5 schließt. Es ist insbesondere vorgesehen, dass die Auslassklappe 5 dann verriegelt wird. Es ist insbesondere vorgesehen, dass dann ein Öffnen des Schiebers erfolgt, so dass Löschmittel bzw. Löschwasser aus dem Vorratsbereich 2 in die Schleuse 3 strömen kann. Dabei wird das Löschflugzeug 100 insbesondere derart ausgerichtet, dass die Schleuse 3 im gewünschten Ausmaß bzw. fast vollständig mit Löschmittel bzw. Löschwasser gefüllt wird. Danach ist insbesondere vorgesehen, den Schieber 71 zu schließen. Dann wird der oder ein anderer Einsatzort angeflogen. Bei Erreichen des gewünschten Einsatzortes wird das vorgeschriebene Procedere wiederholt.

Durch Entnehmen des Löschmittelcontainers 1 wird das Löschflugzeug 100 wieder in ein Transportflugzeug 101 überführt. Dazu werden beispielsweise in Umkehrung des unter Bezugnahme auf Fig. 17 und Fig. 18 beschriebenen Verfahrens die Räder 111 und 112 des Rollmechanismus 11 von dem zweiten Zustand (abgeklappt) in den ersten Zustand (ausgeklappt) zu überführen und den Löschmittelcontainer 1 zuvor von den Spanngurten 91 zu lösen. Anschließend ist vorgesehen, den Löschmittelcontainer 1 mittels nicht näher dargestellten Transportmitteln des Transportfahrzeugs 200 auf das Transportfahrzeug 200 zu ziehen.

Mittels der Erfindung wird ein besonders zuverlässiges und robustes Löschsystem zur Bekämpfung von Wald- und Buschbränden bereit gestellt. Durch die Verwendung von Transportflugzeugen, die üblicherweise andere Aufgaben als das Löschen von Wald-und Buschbränden übernehmen, werden die Kosten für die Bekämpfung von Wald- und Buschbränden deutlich gesenkt und zudem Komplikationen durch die Benutzung von Flugzeugen, die mehrere Monate und/oder über einen längeren Zeitraum hinweg nicht genutzt wurden, vermieden. Zudem können große Mengen an Löschwasser bzw. Löschmittel mittels eines einzigen Löschflugs ausgebracht werden. In Bezug auf den in dem Ausführungsbeispiel beschriebenen Airbus A400M können unter Ausnutzung des zulässigen Gewichts für die Nutzlast 20 t (4 Löschanflüge mit jeweils in etwa 5 t Löschmittel bzw. Löschwasser) Löschmittel bzw. Löschwasser pro Flug ausgebracht werden. Zudem ist der Löschmittelcontainer sehr robust und kommt ohne Elektrik aus. Vielmehr kann der Löschmittelcontainer durch einen einzelnen Bediener manuell mechanisch bedient werden, ohne dass Elektrik ausfallen kann. Durch die Dimensionierung, insbesondere die aufeinander abgestimmten Dimensionierungen von Öffnungen, kommt der Löschmittelcontainer ohne einen Sicherheitsmechanismus aus, der derart ausgestaltet ist, dass er ein Öffnen der Auslassklappe blockiert, wenn der Schieber nicht geschlossen und/oder nicht vollständig geschlossen ist, und dass er ein Öffnen der Auslassklappe blockiert, wenn der Schieber nicht und/oder nicht vollständig geschlossen ist.

Die Erfindung ermöglicht die Herstellung eines Löschflugzeugs aus einem Transportflugzeug innerhalb eines Zeitraums von weniger als einer Stunde. Das annähernd vollständige Befüllen des Löschmittelcontainers mit Löschwasser bzw. Löschmittel ist innerhalb von 10 Minuten und weniger möglich.

POA 21G performed. Der Löschmittelcontainer bzw. der Bausatz bzw. das Kit wird auch unter EASA 21G - POA- Production Organisation Approval hergestellt. Für alle zivilen Flugzeuge und Helicopter.

Der Löschmittelcontainer bzw. der Bausatz bzw. das Kit wird unter anderem EN 9120 Zertifikation erlangen für militärische Flugzeuge.

### Bezugszeichenliste

- 1: Container/Löschmittelcontainer
- 2: Vorratsbereich
- 3: Schleuse
- 4: Auslasskanal
- 5: verriegelbare Auslassklappe
- 51: Ver- und Entriegelungsmechanismus
- 511: Zapfen
- 512: Führungselement
- 513: Betätigungshebel
- 52: Ver- und Entriegelungsplatte
- 521: Führungsaussparung
- 53: Führungsprofil
- 54: Ver- und Entriegelungsarm
- 55: Dichtung
- 6: Trennwand
- 7: Trennwandöffnung
- 71: Schieber
- 72: Kurbel
- 73: Basisplatte
- 75: Welle
- 76: Zahnrad
- 77: Zahnstange
- 8: Separationswand
- 81: Flussöffnung
- 82: Ausgleichsöffnung
- 83: Zusatzöffnung
- 84: Zusatzöffnung
- 85: Zusatzöffnung
- 11: Rollmechanismus (Dollymechanismus)
- 111: klappbares Rad
- 112: klappbares Rad
- 125: Stützvorrichtung
- 126: Stützvorrichtung
- 127: Stützvorrichtung
- 128: Stützvorrichtung
- 129: Stützvorrichtung
- 15: Wassereinlassöffnung
- 16: Verschluss
- 161: Entlüftungsklappe
- 162: Griff

- 18: Kopplungselement

- 91: Spanngurt
- 92: Befestigungselement im Boden des Frachtraum zur Transportflugzeugs

- 100: Löschflugzeug
- 101: Transportflugzeug
- 102: Heckladeklappe (auch Rampe oder Laderampe genannt)
- 103: Scharnier
- 104: Rumpf
- 105: Flugzeugboden
- 107: Stahlseil
- 108: Verankerungen

- 111: Endelement

- 200: Transportfahrzeug
- 300: Tanklöschfahrzeug
- 301: Schlauch

- α: angle of attack

## Patentansprüche

1. Löschmittelcontainer (1) zur Verwendung in einem Transportflugzeug (101), wobei der Löschmittelcontainer (1) eine Schleuse (3) und einen Vorratsbereich (2) umfasst, **dadurch gekennzeichnet, dass** zwischen dem Vorratsbereich (2) und der Schleuse (3) eine Trennwand (6) mit einer Trennwandöffnung (7) angeordnet ist, wobei vorgesehen ist, dass die Trennwandöffnung (7) mittels eines Schiebers (71) verschließbar ist.

2. Löschmittelcontainer (1) nach Anspruch 1, **dadurch gekennzeichnet, dass** der Löschmittelcontainer (1) einen Auslasskanal (4) umfasst, wobei die Schleuse (3) zwischen dem Auslasskanal (4) und dem Vorratsbereich (2) angeordnet ist.

3. Löschmittelcontainer (1) nach Anspruch 1 oder 2, **dadurch gekennzeichnet, dass** zwischen dem Auslasskanal (4) und der Schleuse (3) und/oder auf einer dem Vorratsbereich (2) abgewandten Seite der Schleuse (3) eine verriegelbare Auslassklappe (5) angeordnet ist.

4. Löschmittelcontainer (1) nach Anspruch 1, **dadurch gekennzeichnet, dass** die Öffnungsfläche der Trennwandöffnung nicht mehr als 40 % der Querschnittsfläche des Löschmittelcontainers beträgt.

5. Löschmittelcontainer (1) nach einem der vorhergehenden Ansprüche, **dadurch gekennzeichnet, dass** der Löschmittelcontainer (1) Räder (11) umfasst, die von einem ersten Zustand in einen zweiten Zustand und/oder von dem zweiten Zustand in den ersten Zustand überführbar sind, wobei der Löschmittelcontainer (1) in dem ersten Zustand von den Rädern (11) getragen gerollt werden kann, und wobei der Löschmittelcontainer (1) in dem zweiten Zustand auf zumindest einer Stützvorrichtung (125, 126, 127, 128, 129) aufliegt und nicht von den Rädern (11) getragen wird.

6. Löschmittelcontainer (1) nach einem der vorhergehenden Ansprüche, **dadurch gekennzeichnet, dass** der Vorratsbereich (2) zumindest eine Separationswand (8) mit zumindest einer Flussöffnung (81) im unteren Bereich der Separationswand (8) umfasst, wobei die Öffnungsfläche der Flussöffnung (81) nicht mehr als 15 % der Querschnittsfläche des Löschmittelcontainers (1) beträgt.

7. Löschflugzeug (100), **dadurch gekennzeichnet, dass** es ein Transportflugzeug (101) mit einer Heckladeklappe (102) und einen über die Heckladeklappe (102) aus dem Transportflugzeug (101) entnehmbaren Löschmittelcontainer (1) nach einem der vorhergehenden Ansprüche, aufweist.

8. Löschflugzeug (100) nach Anspruch 7, **dadurch gekennzeichnet, dass** der Löschmittelcontainer (1) derart in dem Transportflugzeug (101) platziert und/oder fixiert ist, dass sich Löschmittel aus der Schleuse (3) und/oder aus dem Löschmittelcontainer (1) über die geöffnete Heckladeklappe (102) ergießt und/oder wobei die Ausleerung des Löschmittelcontainers (1) von innen nach außen über Rampe geschieht.

9. Löschflugzeug (100) nach Anspruch 8, **dadurch gekennzeichnet, dass** die Heckladeklappe (102) mittels eines Scharniers (103) mit dem Rumpf (104) des Transportflugzeugs (101) verbunden ist, wobei der Löschmittelcontainer (1) derart in dem Transportflugzeug (101) platziert und/oder fixiert ist, dass sich das Löschmittel aus der Schleuse (3) und/oder dem Löschmittelcontainer (1) nicht über das Scharnier (103) ergießt.

10. Verfahren zur Herstellung eines Löschflugzeugs (100) nach einem der Ansprüche 7 bis 9, wobei mittels einer Winde und/oder mittels eines Seils und/oder mittels eines Stahlseils (107) über die geöffnete Heckladeklappe (102) ein Löschmittelcontainer (1) in einen Frachtraum des Transportflugzeugs (101) gezogen wird, wobei der Löschmittelcontainer (1) auf Rädern (104) des Löschmittelcontainers (1) und/oder auf den Rädern (104) des Löschmittelcontainers (1) rollt.

11. Verfahren zum Betrieb eines Löschflugzeugs (100) nach einem der Ansprüche 7 bis 9 und/oder zum Betrieb eines gemäß Anspruch 10 hergestellten Löschflugzeugs (100), bei dem ein Löschmittelcontainer (1) mit Löschmittel befüllt wird.

12. Verfahren nach Anspruch 11, **dadurch gekennzeichnet, dass** das Löschflugzeug (100) eine Heckladeklappe (102) zum Beladen des Löschflugzeugs (100) aufweist, wobei die bestimmungsgemäße Abgabe von Löschmittel bei geöffneter Heckladeklappe (102) erfolgt.

13. Verfahren nach Anspruch 11 oder 12, **dadurch gekennzeichnet, dass** der Löschmittelcontainer (1) in dem Löschflugzeug (100) mit Löschmittel befüllt wird und dass das Löschflugzeug (100) mit dem mit Löschmittel gefüllten Löschmittelcontainer (1) bei geschlossener Heckladeklappe (102) vom Boden abhebt, wobei das Löschflugzeug (100) zu dem Einsatzort, an dem Löschmittel (zum Löschen eines Brandes) eingesetzt werden soll, geflogen wird, wobei die Heckladeklappe (102) vor oder beim Erreichen des Einsatzortes geöffnet wird, wobei das Löschflugzeug (100) derart angesteuert wird, dass es bei Erreichen des Einsatzortes derart ausgerichtet ist, dass Löschmittel in der Schleuse (3) gegen die Auslassklappe (5) drückt, wobei die Auslassklappe (5) am Einsatzort entriegelt wird, so dass das Löschmittel in der Schleuse (3) die Auslassklappe (5) aufdrückt und sich über die Heckladeklappe (102) oder über den Auslasskanal und die Heckladeklappe (102) ergießt.

14. Verfahren nach Anspruch 13, **dadurch gekennzeichnet, dass** das Löschflugzeug (100) nach Entleeren der Schleuse (3) und/oder nach Abgabe des Löschmittels derart ausgerichtet wird, dass sich die Auslassklappe (5) schließt, wobei die geschlossene Auslassklappe (5) verriegelt wird, wobei anschließend der Schieber (71) geöffnet wird, so dass Löschmittel aus dem Vorratsbereich (2) in die Schleuse (3) strömen kann, wobei das Löschflugzeug (100) derart ausgerichtet wird, dass die Schleuse (3) im gewünschten Ausmaß mit Löschmittel aus dem Vorratsbereich (2) gefüllt wird und wobei danach Trennwandöffnung (7) der Trennwand (6) mittels des Schiebers (71) geschlossen wird.

## Claims

1. Extinguishing agent container (1) for use in a transport aircraft (101), wherein the extinguishing agent container (1) comprises a lock (3) and a reserve region (2), **characterized in that** a partition wall (6) with a partition wall opening (7) is arranged between the reserve region (2) and the lock (3), wherein provision being made for the partition wall opening (7) to be closable by means of a slide (71).

2. Extinguishing agent container (1) according to claim 1, **characterized in that** the extinguishing agent container (1) comprises an outlet channel (4), wherein the lock (3) is arranged between the outlet channel (4) and the reserve region (2).

3. Extinguishing agent container (1) according to claim 1 or 2, **characterized in that** a lockable outlet flap (5) is arranged between the outlet channel (4) and the lock (3) and/or on a side of the lock (3) facing away from the reserve area (2).

4. Extinguishing agent container (1) according to claim 1, **characterized in that** the opening area of the partition wall opening is not more than 40% of the cross-sectional area of the extinguishing agent container.

5. Extinguishing agent container (1) according to any one of the preceding claims, **characterized in that** the extinguishing agent container (1) comprises wheels (11) which can be transferred from a first state to a second state and/or from the second state to the first state, wherein, in the first state, the extinguishing agent container (1) can be rolled carried by the wheels (11), and wherein, in the second state, the extinguishing agent container (1) rests on at least one support device (125, 126, 127, 128, 129) and is not carried by the wheels (11).

6. Extinguishing agent container (1) according to any one of the preceding claims, **characterized in that** the reserve region (2) comprises at least one separation wall (8) with at least one flow opening (81) in the lower region of the separation wall (8), wherein the opening area of the flow opening (81) being no more than 15% of the cross-sectional area of the extinguishing agent container (1).

7. Firefighting aircraft (100), **characterized in that** it has a transport aircraft (101) with a rear loading flap (102) and an extinguishing agent container (1) according to any one of the preceding claims which can be removed from the transport aircraft (101) via the rear loading flap (102).

8. Firefighting aircraft (100) according to claim 7, **characterized in that** the extinguishing agent container (1) is placed and/or fixed in the transport aircraft (101) in such a way that extinguishing agent pours out of the lock (3) and/or out of the extinguishing agent container (1) via the open rear loading flap (102) and/or wherein the emptying of the extinguishing agent container (1) takes place from the inside to the outside via a ramp.

9. Firefighting aircraft (100) according to claim 8, **characterized in that** the rear loading flap (102) is connected to the fuselage (104) of the transport aircraft (101) by means of a hinge (103), wherein the extinguishing agent container (1) being placed and/or fixed in the transport aircraft (101) in such a way that the extinguishing agent from the lock (3) and/or the extinguishing agent container (1) does not pour out over the hinge (103).

10. Method for manufacturing a firefighting aircraft (100) according to any one of claims 7 to 9, wherein an extinguishing agent container (1) is pulled into a cargo hold of the transport aircraft (101) by means of a winch and/or by means of a cable and/or by means of a steel cable (107) via the opened rear loading flap (102), wherein the extinguishing agent container (1) rolls on wheels (104) of the extinguishing agent container (1) and/or on the wheels (104) of the extinguishing agent container (1).

11. Method for operating a firefighting aircraft (100) according to any one of claims 7 to 9 and/or for operating a firefighting aircraft (100) manufactured according to claim 10, in which an extinguishing agent container (1) is filled with extinguishing agent.

12. Method according to claim 11, **characterized in that** the firefighting aircraft (100) has a rear loading flap (102) for loading the extinguishing aircraft (100), the intended discharge of extinguishing agent taking place when the rear loading flap (102) is open.

13. Method according to claim 11 or 12, **characterized in that** the extinguishing agent container (1) in the firefighting aircraft (100) is filled with extinguishing agent and **in that** the firefighting aircraft (100) with the extinguishing agent container (1) filled with extinguishing agent takes off from the ground with the rear loading flap (102) closed, wherein the firefighting aircraft (100) is flown to the location at which extinguishing agent (for extinguishing a fire) is to be used, wherein the rear loading flap (102) is opened before or on reaching the place of use, wherein the firefighting aircraft (100) is controlled in such a way that on reaching the place of use it is aligned in such a way that extinguishing agent in the lock (3) presses against the outlet flap (5), wherein the outlet flap (5) is unlocked at the place of use so that the extinguishing agent in the lock (3) presses open the outlet flap (5) and pours out via the rear loading flap (102) or via the outlet channel and the rear loading flap (102).

14. Method according to claim 13, **characterized in that**, after emptying the lock (3) and/or after discharging the extinguishing agent, the firefighting aircraft (100) is aligned in such a way that the outlet flap (5) closes, wherein the closed outlet flap (5) is locked, wherein the slide (71) is then opened, so that extinguishing agent can flow from the reserve region (2) into the lock (3), wherein the firefighting aircraft (100) is aligned in such a way that the lock (3) is filled to the desired extent with extinguishing agent from the reserve region (2) and wherein the partition wall opening (7) of the partition wall (6) is then closed by means of the slide (71).

## Revendications

1. Conteneur d'agent d'extinction (1) destiné à être utilisé dans un avion de transport (101), le conteneur d'agent d'extinction (1) comprenant une écluse (3) et une zone de stockage (2), **caractérisé en ce qu'**une paroi de séparation (6) avec une ouverture de paroi de séparation (7) est disposée entre la zone de stockage (2) et l'écluse (3), étant prévu que l'ouverture de paroi de séparation (7) peut être fermée au moyen d'un coulisseau (71).

2. Conteneur d'agent d'extinction (1) selon la revendication 1, **caractérisé en ce que** le conteneur d'agent d'extinction (1) comprend un conduit d'évacuation (4), l'écluse (3) étant située entre le conduit d'évacuation (4) et la zone de stockage (2).

3. Conteneur d'agent d'extinction (1) selon la revendication 1 ou 2, **caractérisé en ce qu'**une trappe d'évacuation verrouillable (5) est disposé entre le conduit d'évacuation (4) et l'écluse (3) et/ou sur un côté de l'écluse (3) opposé à la zone de stockage (2).

4. Conteneur d'agent d'extinction (1) selon la revendication 1, **caractérisé en ce que** la surface d'ouverture de l'ouverture de paroi de séparation n'est pas supérieure à 40 % de la surface de la section transversale du conteneur d'agent d'extinction.

5. Conteneur d'agent extinction (1) selon l'une des revendications précédentes, **caractérisé en ce que** le conteneur d'agent extinction (1) comprend des roues (11) pouvant passer d'un premier état à un deuxième état et/ou du deuxième état au premier état, dans lequel, dans le premier état, le conteneur d'agent extinction (1) peut être roulé en étant porté par les roues (11), et dans lequel, dans le deuxième état, le conteneur d'agent extinction (1) repose sur au moins un dispositif de support (125, 126, 127, 128, 129) et n'est pas porté par les roues (11).

6. Conteneur d'agent d'extinction (1) selon l'une quelconque des revendications précédentes, **caractérisé en ce que** la zone de stockage (2) comprend au moins une paroi de séparation (8) avec au moins une ouverture d'écoulement (81) dans la partie inférieure de la paroi de séparation (8), la surface d'ouverture de l'ouverture d'écoulement (81) n'étant pas supérieure à 15 % de la surface de section transversale du conteneur d'agent d'extinction (1).

7. Avion contre le feu (100), **caractérisé en ce qu'**il comprend un avion de transport (101) avec une porte de chargement arrière (102) et un conteneur d'agent d'extinction (1) selon l'une des revendications précédentes, pouvant être retiré de l'avion de transport (101) par l'intermédiaire de la porte de chargement arrière (102).

8. Avion contre le feu (100) selon la revendication 7, **caractérisé en ce que** le conteneur d'agent d'extinction (1) est placé et/ou fixé dans l'avion de transport (101) de telle sorte que l'agent d'extinction s'écoule de l'écluse (3) et/ou du conteneur d'agent d'extinction (1) par la porte de chargement arrière (102) ouverte et/ou le vidage du conteneur d'agent d'extinction (1) s'effectuant de l'intérieur vers l'extérieur par une rampe.

9. Avion contre le feu (100) selon la revendication 8, **caractérisé par le fait que** la porte de chargement arrière (102) est reliée à la coque (104) de l'avion de transport (101) au moyen d'une charnière (103), le conteneur d'agent extinction (1) étant placé et/ou fixé dans l'avion de transport (101) de telle sorte que l'agent extinction provenant de l'écluse (3) et/ou du conteneur d'agent extincteur (1) ne s'écoule pas sur la charnière (103).

10. Procédé de fabrication d'un avion contre le feu (100) selon l'une des revendications 7 à 9, par lequel, au moyen d'un treuil et/ou d'un câble et/ou d'un câble en acier (107), un conteneur d'extinction (1) est tiré dans une soute de l'avion de transport (101) par l'intermédiaire de la porte de chargement arrière ouverte, le conteneur d'extinction (1) roulant sur des roues (104) du conteneur d'extinction (1) et/ou sur les roues (104) du conteneur d'extinction (1).

11. Procédure d'exploitation d'un avion contre le feu (100) selon l'une des revendications 7 à 9 et/ou d'exploitation d'un avion contre le feu (100) fabriqué selon la revendication 10, dans lequel un conteneur d'agent extinction (1) est rempli d'agent extinction.

12. Procédure selon la revendication 11, **caractérisé en ce que** l'avion contre le feu (100) présente une porte de chargement arrière (102) pour le chargement de l'avion contre le feu (100), et que l'agent d'extinction est distribué comme prévu lorsque la porte de chargement arrière (102) est ouverte.

13. Procédure selon les revendications 11 ou 12, **caractérisé en ce que** le conteneur d'agent extinction (1) est rempli d'agent extinction dans l'avion contre le feu (100) et **en ce que** l'avion contre le feu (100) avec le conteneur d'agent d'extinction (1) rempli d'agent d'extinction décolle du sol avec la porte de chargement arrière fermé (102) et que l'avion contre le feu (100) est dirigé vers le lieu d'utilisation où l'agent d'extinction (pour éteindre un incendie) doit être utilisé, la porte de chargement (102) est ouvert avant ou à l'arrivée du site d'intervention, l'avion contre du feu (100) étant commandé de telle sorte qu'à l'arrivée du site d'intervention, il soit orienté de telle sorte que l'agent extinction dans de l'écluse (3) pousse contre la trappe d'évacuation (5) et que la trappe d'évacuation (5) soit déverrouillé sur le site d'intervention, de sorte que l'agent extinction dans de l'écluse (3) ouvre la trappe d'évacuation (5) et se déverse sur la porte de chargement arrière (102) ou sur le conduit d'évacuation et la porte de chargement arrière (102).

14. Procédure selon la revendication 13, **caractérisé en ce que** l'avion contre le feu (100), après avoir vidé l'écluse (3) et/ou après avoir délivré l'agent d'extinction, est orienté de telle sorte que la trappe d'évacuation (5) se ferme, la trappe d'évacuation (5) fermée étant verrouillée, le coulisseau (71) étant ensuite ouvert, de sorte que l'agent d'extinction peut s'écouler de la zone de stockage (2) dans l'écluse (3), l'avion contre le feu (100) étant orienté de telle sorte que l'écluse (3) est rempli dans la mesure souhaitée avec l'agent d'extinction provenant de la zone de stockage (2) et l'ouverture de la paroi de séparation (7) de la paroi de séparation (6) étant ensuite fermée au moyen du coulisseau (71).
